# EUROPÄISCHE PATENTSCHRIFT

(11) **EP 4 174 691 B1**
(45) Veröffentlichungstag und Bekanntmachung des Hinweises auf die Patenterteilung: **07.08.2024**
(21) Anmeldenummer: 21205657.6
(22) Anmeldetag: 29.10.2021
(51) Int. Cl.: G06F 21/60, H04L 9/40, G06F 21/33

(54) **LEITSYSTEM FÜR EINE TECHNISCHE ANLAGE UND VERFAHREN ZUM ENTFERNEN EINES ODER MEHRERER ZERTIFIKATE**
CONTROL SYSTEM FOR A TECHNICAL INSTALLATION AND METHOD FOR REMOVING ONE OR MORE CERTIFICATES
SYSTÈME DE COMMANDE POUR UNE INSTALLATION TECHNIQUE ET PROCÉDÉ DE RETRAIT D'AU MOINS UN CERTIFICAT

(43) Veröffentlichungstag der Anmeldung: 03.05.2023
(73) Patentinhaber: Siemens Aktiengesellschaft, 80333 München (DE)
(72) Erfinder: Palmin, Anna, 76187 Karlsruhe (DE)
(74) Vertreter: Siemens Patent Attorneys

(56) Entgegenhaltungen:
- WO-A2-2011/112466
- US-A1- 2010 257 358
- US-A1- 2019 379 549

## Beschreibung

Die Erfindung betrifft ein Leitsystem für eine technische Anlage, insbesondere eine Prozess- oder Fertigungsanlage. Außerdem betrifft die Erfindung ein Verfahren zum Entfernen eines oder mehrerer Zertifikate. Zudem betrifft die Erfindung die Verwendung eines Leitsystems zum Betrieb einer technischen Anlage.

Aufgrund des (durch die zunehmende Verwendung von offenen IT-Standards und -Protokolle) steigenden Schutzbedarfs und der Anforderungen der IEC 62443 als des führenden Industrial Security Standards müssen die Kommunikationsverbindungen in Leitsystemen technischer Anlagen zunehmend abgesichert, d.h. gegen unberechtigte Zugriffe angemessen geschützt werden.

Ein angemessener Schutz kann insbesondere - je nach Ergebnissen einer sog. Threat and Risk Analyse (TRA) - die Verschlüsselung und/ oder die Authentifizierung der übertragenen Daten umfassen. Entsprechende Verschlüsselungs- und Authentifizierungsmechanismen sind in der Regel ein Bestandteil sicherer Kommunikationsprotokolle (wie z.B. TLS, OPC UA). Der Einsatz sicherer Kommunikationsprotokollen setzt voraus, dass die Kommunikationsteilnehmer über digitale Zertifikate verfügen.

Die Zertifikate, die in einer operativen Umgebung (wie z.B. einer industriellen Anlage) eingesetzt werden, um beispielsweise sichere Kommunikation oder Benutzerauthentifizierung zu ermöglichen, bezeichnet man in der Regel als sogenannte "operative Zertifikate" (engl. Operational Certificates, OC). Aus Security-Gründen ist es empfehlenswert, ein dediziertes operatives Zertifikat pro verwendetes Kommunikationsprotokoll zu nutzen. Dies bedeutet, dass, falls eine Anlagenkomponente beispielsweise OPC UA zur Absicherung einer Kommunikationsbeziehung und TLS zur Absicherung einer anderen Kommunikationsbeziehung nutzt, die Komponente jeweils ein OPC UA-Zertifikat und ein TLS-Zertifikat benötigt (für die TLS-Server oder die TLS-Client-Authentifizierung). Ist die Menge von Anlagenkomponenten und somit der benötigten operativen Zertifikate klein, können die Zertifikate manuell in die Anlagenkomponenten importiert werden.

Mit einer steigenden Anzahl von Anlagenkomponenten, die in sichere Kommunikationsbeziehungen involviert sind und diverse Zertifikate benötigen, ist es sinnvoll, das Ausstellen von operativen Zertifikaten - basierend auf den von den Anlagenkomponenten generierten Zertifikatsanträgen (engl. Certificate Requests, CR) - sowie die Zuweisung der ausgestellten Zertifikate den Komponenten zu automatisieren. Ein derartiges automatisiertes Zertifikatsmanagement setzt in der Regel eine sog. Public Key Infrastruktur (PKI) voraus, die in der jeweiligen operativen Umgebung (z.B. einer industriellen Anlage) vorhanden sein soll.

Damit die Anlagenkomponenten sich mit den Komponenten der verwendeten Public Key Infrastruktur optimal "verständigen" können, werden in diesen Komponenten immer häufiger Zertifikatsmanagement-Protokolle wie z.B. das "Certificate Management Protocol (CMP)" nach RFC 4210 bzw. nach dem "Lightweight CMP Profile" implementiert. Unter Verwendung derartiger Protokolle können diverse Szenarien (wie beispielsweise initiale Beantragung eines operativen Zertifikats zu einem bestimmten Zweck oder die Beantragung einer Erneuerung eines zu einem bestimmten Zweck bereits vorhandenen operativen Zertifikats) unterschieden werden. Außerdem eignen sich derartige Protokolle dazu, verschiedene Arten von Zertifikaten zu beantragen, denn in den meisten Fällen ist es empfehlenswert, vor der Beantragung von applikationsspezifischen operativen Zertifikaten die Anlagenkomponenten mit den anlagengebundenen Kundenzertifikaten (engl. Customer Device Certificate, kurz: CDC), die die Komponenten an die Kundenanlage binden (wie ein Mitarbeiterausweis die Mitarbeiter an ein Unternehmen binden) auszustatten und diese dann als Basis für die Beantragung eines operativen Zertifikats zu nutzen.

Zertifikate bzw. die zugehörigen privaten Schlüssel (engl. Private Keys) sollten nach aktuellen Vorgaben / Empfehlungen (z.B. von NIST) regelmäßig (z.B. alle zwei Jahre) erneuert werden. Im Kontext eines automatisierten Zertifikatsmanagements bedeutet das, dass die Anlagenkomponenten die Erneuerung (beispielsweise über eine zentrale Registration Authority (RA)) bei einer Certification Authority (CA), die die zu erneuernden Zertifikate ausgestellt hat, beantragen, beispielsweise indem sie Zertifikatsanträge an sie übermitteln. Dazu sollen die Anlagenkomponenten fähig sein, zu überprüfen, ob die aktuelle Uhrzeit zwischen den im Zertifikat aufgeführten Zeitpunkten "Gültig ab" und "Gültig bis" liegt.

Aufgrund des Risikos möglicher Connectivity-Probleme und Time-Outs wird die Erneuerung eines Zertifikats in der Regel vorzeitig (beispielsweise einige Wochen vor dem Ablauf dieses Zertifikats) beantragt oder von einem Benutzer manuell (über ein administratives User Interface) vorgenommen. Das Ergebnis der Zertifikatserneuerung wird durch ein Zertifikat repräsentiert, welches sich in der Regel durch einen anderen öffentlichen Schlüssel und/oder einen anderen Gültigkeitszeitraum von dem ursprünglichen Zertifikat unterscheidet. Die wesentlichen Zertifikatsinhalte (insb. die Werte der Zertifikatsattribute "Antragsteller", "Aussteller", "Seriennummer", "Schlüsselverwendungszweck", "Erweiterter Schlüsselverwendungszweck") bleiben dabei unverändert.

Das Zertifikat wird in der Regel im Zertifikatsspeicher (engl. Certificate Store) der jeweiligen Anlagenkomponente abgelegt, und zwar normalerweise im Unterverzeichnis "Own".

Somit befinden sich nach der erfolgreich durchgeführten Erneuerung mindestens zwei (fast) identische und überlappend gültige Zertifikate, die zum gleichen Verwendungszweck eingesetzt werden können im Verzeichnis "Own". Für den Fall, dass die Zertifikatserneuerung manuell durch einen Benutzer zu Testzwecken mehrfach wiederholt angestoßen wird, oder dass eine Anlagenkomponente aufgrund eines technischen Problems (z.B. eines Verbindungsproblems) ein beantragtes Zertifikat nicht innerhalb einer vorkonfigurierten Zeitspanne erhalten hat und somit die Erneuerung (ggf. mehrfach) wiederholt beantragt hat, können sogar mehrere identische, überlappend gültige Zertifikate, die sich nur durch unterschiedliche Gültigkeitszeiträume und unterschiedliche öffentliche Schlüssel voneinander unterscheiden unter "Own" abgelegt sein.

Dies kann sich, wie folgend dargelegt, nachteilig auswirken: Falls eine Anlagenkomponente ein Zertifikat zu einem bestimmten Verwendungszweck in ihrem Zertifikatsspeicher (unter "Own") - beispielsweise nach dem "Key Usage" bzw. "Extended Key Usage" - sucht, um beispielsweise ein Datenpaket, das sie an eine andere Anlagenkomponente übermitteln soll, zu signieren oder sich gegenüber einer anderen Anlagenkomponente zu authentifizieren, findet sie mehr als nur ein zu diesem dedizierten Zweck passendes Zertifikat. Die Suche nach diesem Zertifikat kann ggf. viel Zeit in Anspruch nehmen und die Performance der Anlagenkomponente beeinträchtigen. Außerdem wird der Zertifikatsspeicher der Anlagenkomponenten dadurch unnötigerweise überfüllt. Hierzu ist zu bedenken, dass die meisten industriellen IoT-Geräte (z.B. die sog. Industrial Edge Geräte) über einen sehr begrenzten Speicherplatz verfügen. Insbesondere aus diesem Grund sollen nur die notwendigen Zertifikate im Zertifikatsspeicher solcher Geräte abgelegt werden.

Überdies wird häufig fälschlicherweise davon ausgegangen, dass der Vorgang zur Erneuerung eines Zertifikats standardmäßig auch die Revokation des bestehenden Zertifikats beinhaltet bzw. nach sich zieht. Dies ist jedoch in der Regel nicht der Fall. Beispielsweise werden gemäß dem sog. Certificate Management Protokoll (CMP) nach RFC 4210 zwei verschiedene Message- bzw. Antragstypen (Key Update Request, KUR, bzw. Revocation Request, RR) zur Beantragung der Zertifikatserneuerung bzw. der Zertifikatsrevokation samt der zugehörigen Response-Typen (Key Update Response, KUP, bzw. Revocation Response, RP) definiert, die in keinem direkten Zusammenhang miteinander stehen. Auch im Kontext des Zertifikatsmanagements unter Verwendung des sog. OPC UA Global Discovery Server (GDS) gemäß der OPC UA Spezifikation ist kein Revokationsantrag explizit vorgesehen.

Würde der Vorgang zur Erneuerung eines Zertifikats standardmäßig die sofortige Revokation des bestehenden Zertifikats beinhalten, würde dies bewirken, dass das bestehende Zertifikat, dessen Erneuerung eine Anlagenkomponente beantragt hat, gleich nach dem Ausstellen eines "Nachfolgers" durch die zuständige ausstellende Certification Authority (Issuing CA) revoziert werden würde, d.h. auf die Zertifikatssperrliste (Certificate Revocation List, CRL) der Issuing CA gesetzt werden würde. Falls die Zustellung des "Nachfolgers" an die betroffene Anlagenkomponente - meist über eine Registration Authority (RA) - erst mit einer Verzögerung erfolgt (was im industriellen Umfeld häufig der Fall ist), kann es somit passieren, dass das bestehende, im Zertifikatsspeicher der betroffenen Anlagenkomponente hinterlegte Zertifikat bereits ungültig ist (weil es auf der CRL der Issuing CA aufgeführt ist), sie jedoch noch über kein neueres Zertifikat verfügt.

Somit würde die Komponente im Rahmen der sicheren Kommunikation "unwissentlich" das revozierte und somit nicht mehr gültige Zertifikat verwenden, was ihrem Kommunikationspartner bei der Prüfung des Revokationsstatus (engl. Revocation Status Checking) im Rahmen der Zertifikatsvalidierung "auffallen" würde. Folglich würde der Kommunikationspartner den Kommunikationsvorgang verweigern, was zu Kommunikationsunterbrechungen und somit zur Gefährdung des Normalbetriebs und der Verfügbarkeit der industriellen Anlagen führen könnte.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Mehrzahl an Zertifizierungsstellen.

WO2011112466 betrifft eine automatische Zertifikatsverwaltung wobei während eines Übergangsintervalls beide Zertifikate gültig sind.

US2010257358 betrifft eine Zertifikatsverwaltung basiert auf eine Anzahl von bereits ausgegebene Zertifikate.

Der Erfindung liegt die Aufgabe zugrunde, ein Leitsystem für eine technische Anlage anzugeben, welches ein verbessertes Zertifikatsmanagement für Komponenten einer technischen Anlage ermöglicht.

Diese Aufgabe wird gelöst durch Leitsystem für eine technische Anlage, insbesondere eine Prozess- oder Fertigungsanlage, mit den Merkmalen des Anspruchs 1. Außerdem wird die Aufgabe gelöst durch ein Verfahren zum Entfernen eines oder mehrerer Zertifikate aus einem Zertifikatsspeicher einer Komponente eines Leitsystems für eine technische Anlage, insbesondere Fertigungs- oder Prozessanlage, mit den Merkmalen des Anspruchs 10. Zudem wird die Aufgabe gelöst durch eine Verwendung eines Leitsystems gemäß Anspruch 18. Vorteilhafte Weiterbildungen ergeben sich aus den abhängigen Ansprüchen.

Ein erfindungsgemäßes Leitsystem für eine technische Anlage weist wenigstens eine Komponente auf, auf der ein Zertifikatsdienst computerimplementiert ist, wobei der Zertifikatsdienst dazu ausgebildet ist einen Zertifikatsspeicher, der der Komponente oder einer weiteren Komponente zugeordnet ist, dahingehend zu überprüfen, ob in dem Zertifikatsspeicher zwei oder mehr Zertifikate hinterlegt sind, die sich jeweils nur hinsichtlich ihres Gültigkeitszeitraums voneinander unterscheiden; und für den Fall, dass bei der Überprüfung derartige zwei oder mehr Zertifikate festgestellt werden, eine Revokation und eine Entfernung des Zertifikats oder der Zertifikate aus dem Zertifikatsspeicher anzustoßen, deren Gültigkeitszeitraum am frühesten endet, so dass nur noch das Zertifikat mit dem am spätesten endenden Gültigkeitszeitraum in dem Zertifikatsspeicher hinterlegt ist.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der technischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Der Zertifikatsdienst kann im Prinzip auf jeder hierfür ausgebildeten Komponente des Leitsystems implementiert sein. Er ist nicht nur dazu ausgebildet, den Zertifikatsspeicher derjenigen Komponente zu überwachen, auf welcher er implementiert ist, sondern vielmehr jede beliebige Komponente des Leitsystems - so sie einem Zertifikatsspeicher zugeordnet ist. Der Zertifikatsspeicher kann auf der jeweiligen Komponente direkt implementiert sein oder die jeweilige Komponente ist einem Zertifikatsspeicher zugeordnet, der sich auf einer weiteren Komponente befindet.

Der Zertifikatsdienst kann aus mehreren Teildiensten bestehen, die auf einer einzigen Komponente, aber auch auf voneinander verschiedenen Komponenten des Leitsystems implementiert sein können. Beispielsweise kann ein erster Teildienst des Zertifikatsdienst die Funktion der Überprüfung des Zertifikatsspeichers erfüllen, während ein zweiter Teildienst die Revokation der betreffenden Zertifikate und ein dritter Teildienst die Entfernung der Zertifikate anstößt.

Das erfindungsgemäße Leitsystem stellt in besonders vorteilhafter Art und Weise sicher, dass im Zertifikatsspeicher einer Anlagenkomponente zu jedem beliebigen Zeitpunkt exakt ein einziges dediziertes Zertifikat zu einem bestimmten Verwendungszweck existiert. Dadurch entfällt die Notwendigkeit, im Bedarfsfall aus vielen identischen Zertifikaten "das passendste" Zertifikat raussuchen zu müssen. Auch der für die Suche erforderliche Zeitaufwand erübrigt sich. Außerdem wird dadurch dazu beigetragen, dass der Zertifikatsspeicher der Anlagenkomponenten optimal genutzt und nicht überladen wird. Der Zertifikatsdienst kann dazu ausgebildet sein, das oder die revozierten und aus dem Zertifikatsspeicher entfernten Zertifikate in einem Archiv des Leitsystems und/oder einer cloudbasierten Umgebung zu hinterlegen, um eine Rückverfolgbarkeit von Zertifikatsrevokationen zu ermöglichen. Insbesondere im Rahmen eines Audit Trails ist es von Interesse, welche Zertifikate aus dem Zertifikatsspeicher entfernt wurden. Dabei können vorteilhafterweise zusätzlich Informationen darüber hinterlegt werden, aus welchem Grund, zu welchem Zeitpunkt, durch welchen Dienst oder aus welchem Zertifikatsspeicher welcher Komponente das betreffende Zertifikat entfernt wurde.

Im Rahmen einer vorteilhaften Weiterbildung der Erfindung ist der Zertifikatsdienst dazu ausgebildet, die Entfernung eines Zertifikats erst dann anzustoßen, wenn ihm eine Bestätigung der Revokation des Zertifikats vorliegt. Hierdurch ist gewährleistet, dass die Entfernung des Zertifikats erst dann erfolgt, wenn dieses Zertifikat nachweislich ungültig, d.h. revoziert worden ist. Die Bestätigung der Revokation des Zertifikats kann dabei eine explizite Revokationsnachricht einer für die Revokation zuständigen Zertifizierungsstelle darstellen. Die Revokationsnachricht richtet sich dabei direkt von der Zertifizierungsstelle an den Zertifikatsdienst, welcher die Revokation beantragt hatte. Alternativ oder zusätzlich kann die Bestätigung der Revokation des Zertifikats eine Sperrliste darstellen, die eine für eine Revokation zuständige Zertifizierungsstelle nach der Revokation des Zertifikats ausstellt, und die das revozierte Zertifikat und weitere von der Zertifizierungsstelle revozierten Zertifikate auflistet. Eine Benachrichtigung des Zertifikatsdienstes über die erfolgte Revokation des Zertifikats erfolgt dabei nicht direkt, sondern indirekt über die Verteilung der Sperrliste. Das Zurverfügungstellen kann dadurch erfolgen, dass die Sperrliste auf eine adäquate Art und Weise entweder direkt auf die Komponenten des Leitsystems oder auf einen Ort, auf den die Komponenten zwecks Bezugs/Uploads der aktualisierten Sperrliste regelmäßig zugreifen (wie z.B. einen Sperrlistenverteilungspunkt, einen PKI-Proxy, eine LRA oder eine RA) verteilt wird.

Vorzugsweise ist der Zertifizierungsdienst dazu ausgebildet, die Revokation eines oder mehrerer Zertifikate durch ein direktes Stellen eines Revokationsantrags an eine für die Revokation von Zertifikaten zuständige Zertifizierungsstelle anzustoßen. Der Zertifizierungsdienst übernimmt das Beantragen der Revokation dabei automatisiert, d.h. unabhängig von einer externen Abfrage. Er kann aber auch dazu ausgebildet sein, die Revokation eines oder mehrerer Zertifikate durch eine entsprechende Aufforderung an einen Operator des Leitsystems anzustoßen. Durch diese Aufforderung an den Operator, die Revokation zu bestätigen, wird ein zusätzlicher Zwischenschritt eingesetzt, der sicherstellen kann, dass eine Revokation des Zertifikats auch tatsächlich erfolgen soll. Es handelt sich um eine zusätzliche Kontrollinstanz, die unter bestimmten Umständen (hohe Sicherheitsrelevanz) vonnöten sein kann.

Die Komponente oder die Komponenten, auf der oder denen der Zertifikatsdienst bzw. die Teildienste des Zertifikatsdienst implementiert sind, können beispielsweise ein Engineering Station Server, ein Automatisierungsgerät, ein Feldgerät, eine speicherprogrammierbare Steuerung, ein Switch, eine Werkzeugmaschine, eine Edge-Komponente, ein Operator Station Server oder ein Operator Station Client darstellen.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Automatisierungsgeräte werden zur Realisierung einer Automatisierung benutzt und können beispielsweise speicherprogrammierbare Steuerungen sein, die eine übergeordnete Steuerungsfunktion für untergeordnete speicherprogrammierbare Steuerungen darstellen.

Der Zertifizierungsdienst kann dazu ausgebildet, für den Fall, dass bei der Überprüfung derartige zwei oder mehr Zertifikate festgestellt werden, oder beim Vorliegen der expliziten Revokationsnachricht der für die Revokation zuständigen Zertifizierungsstelle, oder beim Vorliegen der nach der Revokation des Zertifikats ausgestellten Sperrliste, oder bei der Revokation des Zertifikats dieses Ereignis als Security-Event zu klassifizieren und eine entsprechende Nachricht in einem Archiv des Leitsystems und/oder eine cloudbasierten Umgebung zu hinterlegen. Dabei kann es sich bei dem Archiv bzw. der cloudbasierten Umgebung beispielsweise um ein sogenanntes SIEM-System (Security Information and Event Management) handeln, in welchem alle sicherheitsrelevanten Informationen/Daten der technischen Anlage hinterlegt werden.

Die Aufgabe wird zudem gelöst durch ein Verfahren zum Entfernen eines oder mehrerer Zertifikate aus einem Zertifikatsspeicher einer Komponente eines Leitsystems für eine technische Anlage, insbesondere Fertigungs- oder Prozessanlage, umfassend:
a) Überprüfen durch einen auf der Komponente oder auf einer weiteren Komponente des Leitsystems computerimplementierten Zertifikatsdienst, ob in dem Zertifikatsspeicher zwei oder mehr Zertifikate hinterlegt sind, die sich jeweils nur hinsichtlich ihres Gültigkeitszeitraums voneinander unterscheiden,
b) Für den Fall, dass bei der Überprüfung derartige zwei oder mehr Zertifikate festgestellt werden, Anstoßen der Revokation und Entfernung des Zertifikats oder der Zertifikate aus dem Zertifikatsspeicher, deren Gültigkeitszeitraum am frühesten endet, durch den Zertifikatdienst, so dass nur noch das Zertifikat mit dem am spätesten endenden Gültigkeitszeitraum in dem Zertifikatsspeicher hinterlegt ist.

Der Zertifizierungsdienst kann die Revokation eines oder mehrerer Zertifikate durch ein direktes Stellen eines Revokationsantrags an eine für die Revokation von Zertifikaten zuständige Zertifizierungsstelle anstoßen.

Der Zertifikatsdienst kann die Entfernung eines Zertifikats erst dann anstoßen, wenn ihm eine Bestätigung der Revokation des Zertifikats vorliegt.

Die Bestätigung der Revokation des Zertifikats kann eine explizite Revokationsnachricht einer für die Revokation des Zertifikats zuständigen Zertifizierungsstelle oder eine Sperrlist, die eine für eine Revokation zuständige Zertifizierungsstelle nach der Revokation des Zertifikats ausstellt, und die das revozierte Zertifikat und weitere von der Zertifizierungsstelle revozierte Zertifikate auflistet, darstellen.

Der Zertifizierungsdienst kann die Revokation eines oder mehrerer Zertifikate durch ein direktes Stellen eines Revokationsantrags an eine für die Revokation von Zertifikaten zuständige Zertifizierungsstelle oder durch eine entsprechende Aufforderung an einen Operator des Leitsystems anstoßen.

Die Aufgabe wird zudem gelöst durch die Verwendung eines Leitsystems wie zuvor erläutert zum Betrieb einer technischen Anlage, insbesondere einer Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: eine Prinzipskizze eines erfindungsgemäßen Verfahrens gemäß einem ersten Aspekt; und
- FIG 2: eine Prinzipskizze eines erfindungsgemäßen Verfahrens gemäß einem zweiten Aspekt.

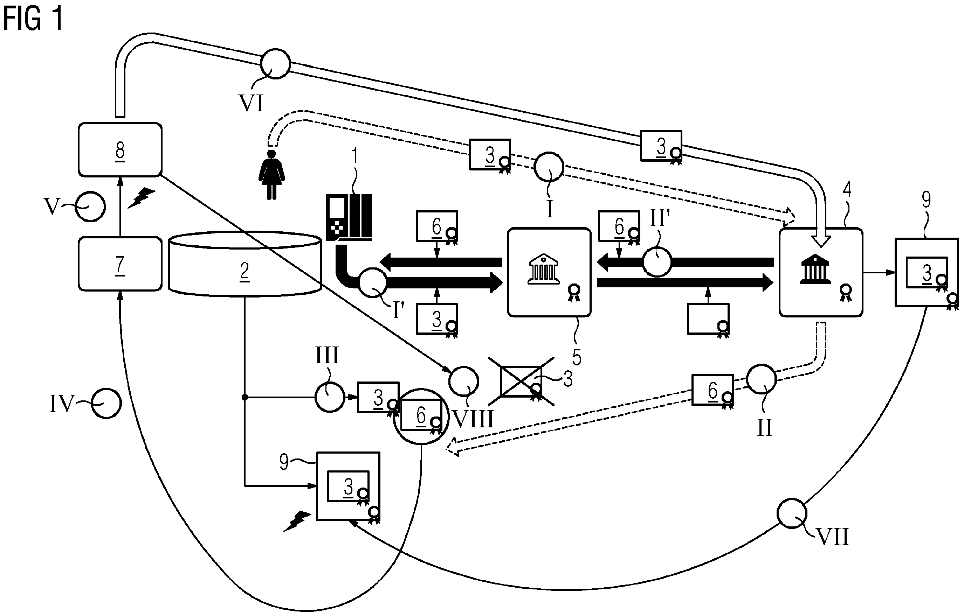

In FIG 1 ist ein erfindungsgemäßes Verfahren gemäß einem ersten Aspekt schematisch dargestellt. Eine Komponente 1, die Teil eines Leitsystems für eine technische Anlage ist, und die beispielsweise ein Steuergerät, ein Switch, ein Operator Station Client oder ein Edge-Gerät darstellt, weist einen Zertifikatsspeicher 2 auf. In diesem ist ein erstes Zertifikat 3 hinterlegt. Dieses erste Zertifikat 3 kann beispielsweise ein TLS Server/Client Zertifikat oder ein OPC UA Server/Client Zertifikat sein.

In einem ersten Schritt I beantragt ein Operator der technischen Anlage eine Erneuerung des ersten Zertifikats 3. Der Antrag für die Erneuerung des ersten Zertifikats 3 kann auch von der Komponente 1 selbst automatisch gestellt werden (Schritt I'). Die Erneuerungsanträge können direkt an eine Zertifizierungsstelle 4 gestellt werden, die für die Ausstellung und für die Revokation von Zertifikaten in der technischen Anlage zuständig ist. In FIG 1 wird der Antrag vom Operator direkt an die Zertifizierungsstelle 4 gerichtet. Die Komponente 1 richtet ihren Antrag an eine Registrierungsstelle 5, die den Erneuerungsantrag (nach einer Verifikation der Identität der Komponente 1, auf die hier nicht weiter eingegangen wird) an die Zertifizierungsstelle 4 weiterleitet.

Nach der Überprüfung des Zertifikatserneuerungsantrags übermittelt die Zertifizierungsstelle 4 ein neues, zweites Zertifikat 6 an die Komponente 1. Dies erfolgt entweder manuell über den Operator (Schritt II) oder automatisch über die Registrierungsstelle 5 (Schritt II'). Das zweite Zertifikat 6 wird in dem Zertifikatsspeicher 2 der Komponente 1 abgelegt (Schritt III). Das erste Zertifikat 3 und das zweite Zertifikat sind für dieselbe Komponente 1 für denselben Zweck ausgestellt und unterscheiden sich nur in ihrem Gültigkeitszeitraum. In dem Zertifikatsspeicher 2 befinden sich nach dem Schritt III demnach zwei Zertifikate 3, 6, die sich nur hinsichtlich ihres Gültigkeitszeitraums voneinander unterscheiden.

Das Leitsystem der technischen Anlage umfasst einen computerimplementierten Zertifikatsdienst 7 (einen sogenannten "Certificate Overlap Watchdog"), der den Zertifikatsspeicher 2 dahingehend überprüft, ob in dem Zertifikatsspeicher 2 zwei oder mehr Zertifikate 3, 6 hinterlegt sind, die sich jeweils nur hinsichtlich ihres Gültigkeitszeitraums voneinander unterscheiden (Schritt IV). Im vorliegenden Ausführungsbeispiel liegen solche zwei Zertifikate 3, 6 vor. Daraufhin erzeugt der Zertifikatsdienst 7 unmittelbar eine Nachricht, insbesondere eine Security-Event Nachricht (beispielsweise "Certificate_Overlap_Detected" - (Schritt V).

Der Zertifikatsdienst 7 weist einen Teildienst 8 auf, der auf die Erzeugung der Nachricht hin eine Revokation des ersten Zertifikats 2 anstößt (Schritt VI). Dies kann durch ein automatisches, direktes Stellen eines Revokationsantrags für das erste Zertifikat 2 an die Zertifizierungsstelle 4 erfolgen. Dieser Revokationsantrag kann gemäß dem "Internet X.509 Public Key Infrastructure Certificate Management Protocol (CMP)" ausgebildet sein. Alternativ kann auch eine Aufforderung an den Operator des Leitsystems generiert werden, die dem Operator beispielsweise über einen Operator Station Client visuell dargeboten wird. Hierauf kann der Operator dann manuell die Revokation des ersten Zertifikats 2 anstoßen.

Der Teildienst 8 des Zertifikatdienstes 7 erzeugt eine Nachricht, insbesondere eine Security-Event Nachricht (beispielsweise "Revocation_Completed"), sobald die Revokation des ersten Zertifikats 3 nachweisbar vollzogen wurde (Schritt VII). Diesen Nachweis liefert die Zertifizierungsstelle 4 entweder direkt über eine Antwort auf den Revokationsantrag (eine sogenannte "Revocation Response"). Alternativ erhält der Zertifikatsdienst 7 den Nachweis indirekt über eine aktualisierte Sperrliste 9, die die Zertifizierungsstelle 4 erzeugt, im Leitsystem verteilt und unter anderem in dem Zertifikatspeicher 2 der Komponente 1 hinterlegt. Auf dieser Sperrliste 9 ist das erste Zertifikat 3 als revoziertes Zertifikat aufgeführt.

Der Teildienst 8 des Zertifikatsdienstes 7 entfernt daraufhin das erste Zertifikat 3 aus dem Zertifikatsspeicher 2 der Komponente 1 (Schritt VIII). Nach dem Entfernen wird das erste Zertifikat 3 in einem Archiv des Leitsystems oder in einer cloudbasierten Umgebung archiviert, um für ein späteres Audit Trail zur Verfügung zu stehen.

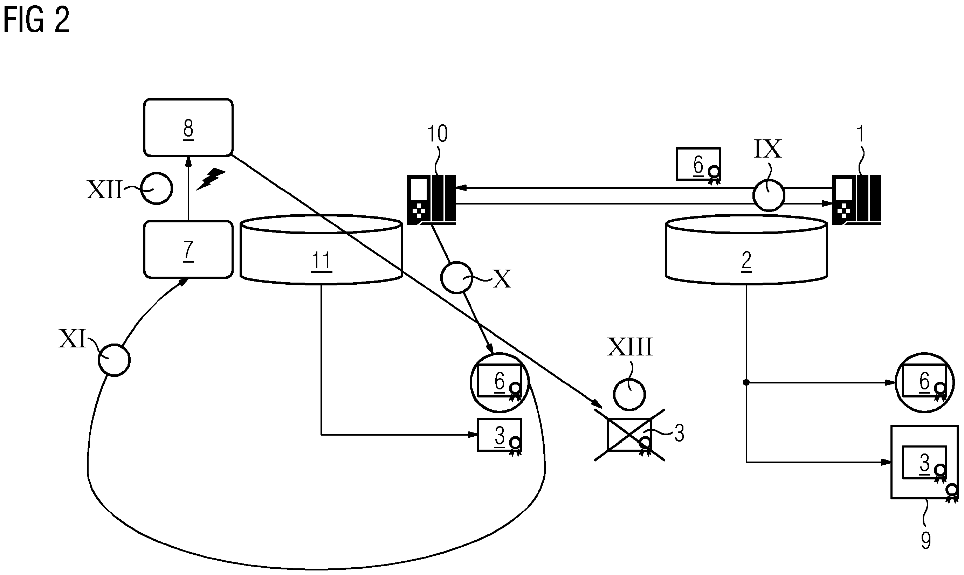

FIG 2 zeigt eine weitergehende Verwendung des erfindungsgemä-ßen Leitsystems bzw. des davon umfassten Zertifikatsdienstes 7. In dem Zertifikatsspeicher 2 der Komponente 1 befinden sich unter anderem das zweite Zertifikat 6 und die aktualisierte Sperrliste 9.

Die Komponente 1 baut eine Kommunikationsverbindung zu einer weiteren Komponente 10 des Leitsystems auf (Schritt IX). Dabei verwendet die Komponente 1 ihr neues, zweites Zertifikat 6 zum Aufbau einer sicheren Kommunikationsverbindung (z.B. im Rahmen eines Handshake-Verfahrens). Entsprechend den aktuellen Security-Konzepten wird das zweite Zertifikat 6 in einem Zertifikatsspeicher 11 der weiteren Komponente 10 hinterlegt (Schritt X). In diesem Zertifikatsspeicher 11 befindet sich noch das alte, erste Zertifikat 3, das die weitere Komponente 10 im Rahmen eines vergangenen Kommunikationsaufbaus erhalten hatte.

Der Zertifikatsdienst 7 überwacht auch den Zertifikatsspeicher 11 der weiteren Komponente 10 und erkennt die beiden doppelten Zertifikate 3, 6, die sich nur hinsichtlich ihrer Gültigkeitszeiträume unterscheiden (Schritt XI). Analog zum Verfahren, welches in FIG 1 beschrieben ist, erzeugt der Zertifikatsdienst 7 eine Nachricht, insbesondere eine Securit-Event Nachricht (Schritt XII), die daraufhin das überflüssige erste Zertifikat 3 aus dem Zertifikatsspeicher 11 der weiteren Komponente 10 entfernt (und in einem Archiv / einer cloudbasierten Umgebung archiviert).

Obwohl die Erfindung im Detail durch das bevorzugte Ausführungsbeispiel näher illustriert und beschrieben wurde, so ist die Erfindung nicht durch die offenbarten Beispiele eingeschränkt.

## Patentansprüche

1. Leitsystem für eine technische Anlage, insbesondere eine Prozess- oder Fertigungsanlage, mit wenigstens einer Komponente (1, 10), auf der oder denen ein Zertifikatsdienst (7, 8) computerimplementiert ist, wobei der Zertifikatsdienst (7, 8) dazu ausgebildet ist:
- einen Zertifikatsspeicher (2, 11), der der Komponente (1, 10) oder einer weiteren Komponente (1, 10) zugeordnet ist, dahingehend zu überprüfen, ob in dem Zertifikatsspeicher (2, 11) zwei oder mehr Zertifikate (3, 6) hinterlegt sind, die sich jeweils nur hinsichtlich ihres Gültigkeitszeitraums voneinander unterscheiden, und
- für den Fall, dass bei der Überprüfung derartige zwei oder mehr Zertifikate (3, 6) festgestellt werden, eine Revokation und eine Entfernung des Zertifikats (3, 6) oder der Zertifikate (3, 6) aus dem Zertifikatsspeicher (2, 11) anzustoßen, deren Gültigkeitszeitraum am frühesten endet, so dass nur noch das Zertifikat (3, 6) mit dem am spätesten endenden Gültigkeitszeitraum in dem Zertifikatsspeicher (2, 11) hinterlegt ist.

2. Leitsystem nach Anspruch 1, bei dem der Zertifikatsdienst (7, 8) dazu ausgebildet ist, das oder die revozierten und aus dem Zertifikatsspeicher (2, 11) entfernten Zertifikate (3, 6) in einem Archiv des Leitsystems und/oder einer cloudbasierten Umgebung zu hinterlegen, um eine Rückverfolgbarkeit von Zertifikatsrevokationen zu ermöglichen.

3. Leitsystem nach Anspruch 1, bei dem der Zertifikatsdienst (7, 8) dazu ausgebildet ist, die Entfernung eines Zertifikats (3, 6) erst dann anzustoßen, wenn ihm eine Bestätigung der Revokation des Zertifikats (3, 6) vorliegt.

4. Leitsystem nach Anspruch 3, bei dem die Bestätigung der Revokation des Zertifikats (3, 6) eine explizite Revokationsnachricht einer für die Revokation zuständigen Zertifizierungsstelle (4) darstellt.

5. Leitsystem nach Anspruch 3 oder 4, bei dem die Bestätigung der Revokation des Zertifikats (3, 6) eine Sperrliste (9) darstellt, die eine für eine Revokation zuständige Zertifizierungsstelle (4) nach der Revokation des Zertifikats (3, 6) ausstellt, und die das revozierte Zertifikat (3, 6) und weitere von der Zertifizierungsstelle (4) revozierte Zertifikate (3, 6) auflistet.

6. Leitsystem nach einem der vorangegangenen Ansprüche, bei dem der Zertifizierungsdienst (7, 8) dazu ausgebildet ist, die Revokation eines oder mehrerer Zertifikate (3, 6) durch ein direktes Stellen eines Revokationsantrags an eine für die Revokation von Zertifikaten (3, 6) zuständige Zertifizierungsstelle (4) anzustoßen.

7. Leitsystem nach einem der Ansprüche 1 bis 5, bei dem der Zertifizierungsdienst (7, 8) dazu ausgebildet ist, die Revokation eines oder mehrerer Zertifikate (3, 6) durch eine entsprechende Aufforderung an einen Operator des Leitsystems anzustoßen.

8. Leitsystem nach einem der vorangegangenen Ansprüche, bei dem die Komponente (1, 10) ein Automatisierungsgerät, ein Feldgerät, eine speicherprogrammierbare Steuerung, ein Switch, eine Werkzeugmaschine, eine Edge-Komponente, ein Operator Station Server oder ein Operator Station Client darstellt.

9. Leitsystem nach einem der vorangegangenen Ansprüche, bei dem der Zertifizierungsdienst (7, 8) dazu ausgebildet ist, für den Fall, dass bei der Überprüfung derartige zwei oder mehr Zertifikate (3, 6) festgestellt werden, oder beim Vorliegen der expliziten Revokationsnachricht der für die Revokation zuständigen Zertifizierungsstelle (4), oder beim Vorliegen der nach der Revokation des Zertifikats (3, 6) ausgestellten Sperrliste (4), oder bei der Revokation des Zertifikats (3, 6) dieses Ereignis als Security-Event zu klassifizieren und eine entsprechende Nachricht in einem Archiv des Leitsystems und/oder eine cloudbasierten Umgebung zu hinterlegen.

10. Verfahren zum Entfernen eines oder mehrerer Zertifikate (3, 6) aus einem Zertifikatsspeicher (2, 11) einer Komponente (1, 10) eines Leitsystems für eine technische Anlage, insbesondere Fertigungs- oder Prozessanlage, umfassend:
a) Überprüfen durch einen auf der Komponente (1, 10) oder auf einer weiteren Komponente (1, 10) des Leitsystems computerimplementierten Zertifikatsdienst (7, 8), ob in dem Zertifikatsspeicher (2, 11) zwei oder mehr Zertifikate (3, 6) hinterlegt sind, die sich jeweils nur hinsichtlich ihres Gültigkeitszeitraums voneinander unterscheiden,
b) Für den Fall, dass bei der Überprüfung derartige zwei oder mehr Zertifikate (3, 6) festgestellt werden, Anstoßen der Revokation und Entfernung des Zertifikats (3, 6) oder der Zertifikate (3, 6) aus dem Zertifikatsspeicher (2, 11), deren Gültigkeitszeitraum am frühesten endet, durch den Zertifikatdienst (7, 8), so dass nur noch das Zertifikat (3, 6) mit dem am spätesten endenden Gültigkeitszeitraum in dem Zertifikatsspeicher (2, 11) hinterlegt ist.

11. Verfahren nach Anspruch 10, bei dem der Zertifikatsdienst (7, 8) das oder die revozierten und aus dem Zertifikatsspeicher (2, 11) entfernten Zertifikate (3, 6) in einem Archiv des Leitsystems und/oder einer cloudbasierten Umgebung hinterlegt, um eine Rückverfolgbarkeit von Zertifikatsrevokationen zu ermöglichen.

12. Verfahren nach Anspruch 10 oder 11, bei dem der Zertifikatsdienst (7, 8) die Entfernung eines Zertifikats (3, 6) erst dann anstößt, wenn ihm eine Bestätigung der Revokation des Zertifikats (3, 6) vorliegt.

13. Verfahren nach einem der Ansprüche 10 bis 12, bei dem die Bestätigung der Revokation des Zertifikats (3, 6) eine explizite Revokationsnachricht einer für die Revokation des Zertifikats (3, 6) zuständigen Zertifizierungsstelle (4) darstellt.

14. Verfahren nach einem der Ansprüche 10 bis 13, bei dem die Bestätigung der Revokation des Zertifikats (3, 6) eine Sperrliste (9) darstellt, die eine für eine Revokation zuständige Zertifizierungsstelle (4) nach der Revokation des Zertifikats (3, 6) ausstellt, und die das revozierte Zertifikat (3, 6) und weitere von der Zertifizierungsstelle (4) revozierte Zertifikate (3, 6) auflistet.

15. Verfahren nach einem der Ansprüche 10 bis 14, bei dem der Zertifizierungsdienst (7, 8) die Revokation eines oder mehrerer Zertifikate (3, 6) durch ein direktes Stellen eines Revokationsantrags an eine für die Revokation von Zertifikaten (3, 6) zuständige Zertifizierungsstelle (4) anstößt.

16. Verfahren nach einem der Ansprüche 10 bis 14, bei dem der Zertifizierungsdienst (7, 8) die Revokation eines oder mehrerer Zertifikate (3, 6) durch eine entsprechende Aufforderung an einen Operator des Leitsystems anstößt.

17. Verfahren nach einem der Ansprüche 10 bis 16, bei dem der Zertifizierungsdienst (7, 8) für den Fall, dass bei der Überprüfung derartige zwei oder mehr Zertifikate (3, 6) festgestellt werden, oder beim Vorliegen der expliziten Revokationsnachricht der für die Revokation zuständigen Zertifizierungsstelle (4), oder beim Vorliegen der nach der Revokation des Zertifikats (3, 6) ausgestellten Sperrliste (9), oder bei der Revokation des Zertifikats (3, 6) dieses Ereignis als Security-Event klassifiziert und eine entsprechende Nachricht in einem Archiv des Leitsystems und/oder eine cloudbasierten Umgebung hinterlegt.

18. Verwendung eines Leitsystems gemäß einem der Ansprüche 1 bis 9 zum Betrieb einer technischen Anlage, insbesondere einer Prozess- oder Fertigungsanlage.

## Claims

1. Control system for a technical installation, in particular a process or manufacturing installation, having at least one component (1, 10) on which a certificate service (7, 8) is computer-implemented, wherein the certificate service (7, 8) is embodied to:
- check a certificate store (2, 11) which is assigned to the component (1, 10) or a further component (1, 10) in order to see whether two or more certificates (3, 6), which only differ from one another in terms of their validity period, are stored in the certificate store (2, 11), and
- in the event of the check identifying two or more certificates (3, 6) of this kind, to initiate a revocation and removal of the certificate (3, 6) or certificates (3, 6) from the certificate store (2, 11) with the validity period that ends the earliest, so that only the certificate (3, 6) with the validity period that ends the latest remains stored in the certificate store (2, 11).

2. Control system according to claim 1, in which the certificate service (7, 8) is embodied to store the certificate or certificates (3, 6) that are revoked and removed from the certificate store (2, 11) in an archive of the control system and/or a cloud-based environment in order to enable traceability of certificate revocations.

3. Control system according to claim 1, in which the certificate service (7, 8) is embodied only to initiate the removal of a certificate (3, 6) when it has received confirmation of the revocation of the certificate (3, 6).

4. Control system according to claim 3, in which the confirmation of the revocation of the certificate (3, 6) represents an explicit revocation message from a certification authority (4) responsible for the revocation.

5. Control system according to claim 3 or 4, in which the confirmation of the revocation of the certificate (3, 6) represents a revocation list (9) issued by a certification authority (4) responsible for revocation after the revocation of the certificate (3, 6) and which lists the revoked certificate (3, 6) and further certificates (3, 6) revoked by the certification authority (4).

6. Control system according to one of the preceding claims, in which the certification service (7, 8) is embodied to initiate the revocation of one or more certificates (3, 6) by directly submitting a revocation request to a certification authority (4) responsible for the revocation of certificates (3, 6).

7. Control system according to one of claims 1 to 5, in which the certification service (7, 8) is embodied to initiate the revocation of one or more certificates (3, 6) by a corresponding prompt to an operator of the control system.

8. Control system according to one of the preceding claims, in which the component (1, 10) represents an automation device, a field device, a programmable logic controller, a switch, a machine tool, an edge component, an operator station server or an operator station client.

9. Control system according to one of the preceding claims, in which, in the event of the check identifying two or more certificates (3, 6) of this kind, or in the case of the existence of the explicit revocation message from the certification authority (4) responsible for the revocation, or the existence of the revocation list (4) issued after the revocation of the certificate (3, 6), or in the case of the revocation of the certificate (3, 6), the certification service (7, 8) is embodied to classify this event as a security event and to store a corresponding message in an archive of the control system and/or a cloud-based environment.

10. Method for removing one or more certificates (3, 6) from a certificate store (2, 11) of a component (1, 10) of a control system for a technical installation, in particular a manufacturing or process installation, comprising:
a) checking by means of a computer-implemented certificate service (7, 8) on the component (1, 10) or on a further component (1, 10) of the control system whether two or more certificates (3, 6), which only differ from one another in terms of their validity period, are stored in the certificate store (2, 11),
b) in the event of the check identifying two or more certificates (3, 6) of this kind, initiation by the certificate service of the revocation and removal of the certificate (3, 6) or certificates (3, 6) from the certificate store (2, 11) with the validity period that ends the earliest (7, 8), so that only the certificate (3, 6) with the validity period that ends the latest remains stored in the certificate store (2, 11).

11. Method according to claim 10, in which the certificate service (7, 8) stores the certificate or certificates (3, 6) that are revoked and removed from the certificate store (2, 11) in an archive of the control system and/or a cloud-based environment in order to enable traceability of certificate revocations.

12. Method according to claim 10 or 11, in which the certificate service (7, 8) only initiates the removal of a certificate (3, 6) when it has received confirmation of the revocation of the certificate (3, 6).

13. Method according to one of claims 10 to 12, in which the confirmation of the revocation of the certificate (3, 6) represents an explicit revocation message from a certification authority (4) responsible for the revocation of the certificate (3, 6).

14. Method according to one of claims 10 to 13, in which the confirmation of the revocation of the certificate (3, 6) represents a revocation list (9) issued by a certification authority (4) responsible for revocation after the revocation of the certificate (3, 6) and lists the revoked certificate (3, 6) and further certificates (3, 6) revoked by the certification authority (4).

15. Method according to one of claims 10 to 14, in which the certification service (7, 8) initiates the revocation of one or more certificates (3, 6) by directly submitting a revocation request to a certification authority (4) responsible for the revocation of certificates (3, 6).

16. Method according to one of claims 10 to 14, in which the certification service (7, 8) initiates the revocation of one or more certificates (3, 6) by a corresponding prompt to an operator of the control system.

17. Method according to one of claims 10 to 16, in which, in the event of the check identifying two or more certificates (3, 6) of this kind, or in the case of the existence of the explicit revocation message from the certification authority (4) responsible for the revocation, or the existence of the revocation list (9) issued after the revocation of the certificate (3, 6), or in the case of the revocation of the certificate (3, 6), the certification service (7, 8) classifies this event as a security event and stores a corresponding message in an archive of the control system and/or a cloud-based environment.

18. Use of a control system according to one of claims 1 to 9 to operate a technical installation, in particular a process or manufacturing installation.

## Revendications

1. Système de commande d'une installation technique, en particulier d'une installation de processus ou de fabrication, comprenant au moins un composant (1, 10), sur lequel ou sur lesquels un service (7, 8) de certification est mis en oeuvre par ordinateur, dans lequel le service (7, 8) de certification est conformé pour :
- contrôler une mémoire (2, 11) de certificat, qui est affectée au composant (1, 10) ou un autre composant (1, 10), sur le point de savoir, s'il est mis dans la mémoire (2, 11) de certification deux ou plusieurs certificats (3, 6), qui se distinguent les uns des autres respectivement seulement en ce qui concerne leur laps de temps de validité, et
- dans le cas où, lors du contrôle, on constate deux ou plusieurs certificats (3, 6) de ce genre, provoquer une révocation et un retrait du certificat (3, 6) ou des certificats (3, 6) de la mémoire (2, 11) de certification, dont le laps de temps de validité se termine le plus tôt, de sorte qu'il ne reste, dans la mémoire (2, 11) de certification, plus que le certificat (3, 6) ayant le laps de temps de validité se terminant le plus tard.

2. Système de commande suivant la revendication 1, dans lequel le service (7, 8) de certification est constitué de manière à mettre en mémoire le ou les certificats (3, 6) révoqués et retirés de la mémoire (2, 11) de certification dans une archive du système de commande et/ou dans un environnement reposant sur le nuage, afin de permettre une possibilité de suivre des révocations de certificats.

3. Système de commande suivant la revendication 1, dans lequel le service (7, 8) de certification est constitué de manière à ne provoquer le retrait d'un certificat (3, 6) que s'il y a une confirmation de la révocation du certificat (3, 6).

4. Système de commande suivant la revendication 3, dans lequel la confirmation de la révocation du certificat (3, 6) représente un message de révocation explicite d'un poste (4) de certification compétent pour la révocation.

5. Système de commande suivant la revendication 3 ou 4, dans lequel la confirmation de la révocation du certificat (3, 6) représente une liste (9) d'interdiction, qu'établit, après la révocation du certificat (3, 6), un poste (4) de certification compétent pour une révocation et qui énumère le certificat (3, 6) révoqué et d'autres certificats (3, 6) révoqués par le poste (4) de certification.

6. Système de commande suivant l'une des revendications précédentes, dans lequel le service (7, 8) de certification est constitué pour provoquer la révocation d'un ou de plusieurs certificats (3, 6) par une demande directe de révocation à un poste (4) de certification compétent pour la révocation de certificats (3, 6).

7. Système de commande suivant l'une des revendications 1 à 5, dans lequel le service (7, 8) de certification est constitué pour provoquer la révocation d'un ou de plusieurs certificats (3, 6) par une invitation correspondante à un opérateur du système de commande.

8. Système de commande suivant l'une des revendications précédentes, dans lequel le composant (1, 10) représente un appareil d'automatisation, un appareil sur site, un système à programme enregistré, un switch, une machine-outil, un composant edge, un serveur de poste opérateur ou un client de poste opérateur.

9. Système de commande suivant l'une des revendications précédentes, dans lequel le service (7, 8) de certification est constitué pour, dans le cas où, lors du contrôle, on constate tels deux ou plusieurs certificats (3, 6), ou en présence du message de révocation explicite du poste (4) de certification compétent pour la révocation, ou en présence de la liste (4) d'interdiction établie après la révocation du certificat (3, 6), ou à la révocation du certificat (3, 6), classer cet événement comme security event et mettre un message correspondant dans une archive du système de commande et/ou dans un environnement reposant sur le nuage.

10. Procédé de retrait d'un ou de plusieurs certificats (3, 6) d'une mémoire (2, 11) de certificats d'un composant (1, 10) d'un système de commande d'une installation technique, en particulier d'une installation de fabrication ou de processus comprenant :
a) contrôler, par un service (7, 8) de certification mis en oeuvre par ordinateur sur le composant (1, 10) ou sur un autre composant (1, 10) du système de commande, si sont mis, dans la mémoire (2, 11) de certificats, deux ou plusieurs certificats (3, 6), qui ne se distinguent l'un de l'autre qu'en ce qui concerne leur laps de temps de validité,
b) dans le cas où, lors du contrôle, on constate tels deux ou plusieurs certificats (3, 6), provoquer la révocation et le retrait du certificat (3, 6) ou des certificats (3, 6) de la mémoire (2, 11) de certificats, dont le laps de temps de validité se termine le plus tôt par le service (7, 8) de certification, de manière à ne laisser, dans la mémoire (2, 11) de certificats, que le certificat(3, 6) ayant le laps de temps de validité se terminant le plus tard.

11. Procédé suivant la revendication 10, dans lequel le service (7, 8) de certification met le ou les certificats (3, 6) révoqués et retirés de la mémoire (2, 11) de certification dans une archive du système de commande et/ou dans un environnement reposant sur le nuage, afin de permettre une possibilité de suivre des révocations de certificats.

12. Procédé suivant la revendication 10 ou 11, dans lequel le service (7, 8) de certification ne provoque le retrait d'un certificat (3, 6) que s'il a une confirmation de la révocation du certificat (3, 6).

13. Procédé suivant l'une des revendications 10 à 12, dans lequel la confirmation de la révocation du certificat (3, 6) représente un message de révocation explicite d'un poste (4) de certification compétent pour la révocation du certificat (3, 6).

14. Procédé suivant l'une des revendications 10 à 13, dans lequel la confirmation de la révocation du certificat (3, 6) représente une liste (9) d'interdiction, qu'établit, après la révocation du certificat (3, 6), un poste (4) de certification compétent pour une révocation, et qui énumère le certificat (3, 6) révoqué et d'autres certificats (3, 6) révoqués par le poste (4) de certification.

15. Procédé suivant l'une des revendications 10 à 14, dans lequel le service (7, 8) de certification provoque la révocation d'un ou de plusieurs certificats (3, 6) par une demande directe de révocation à un poste (4) de certification compétent pour la révocation de certificats (3, 6).

16. Procédé suivant l'une des revendications 10 à 14, dans lequel le service (7, 8) de certification provoque la révocation d'un ou de plusieurs certificats (3, 6) par une invitation correspondante à un opérateur du système de commande.

17. Procédé suivant l'une des revendications 10 à 16, dans lequel le service (7, 8) de certification, dans le cas où, lors du contrôle, on constate de tels deux ou plusieurs certificats (3, 6), ou en présence du message de révocation explicite du poste (4) de certification compétent pour la révocation, ou en présence de la liste (9) d'interdiction établie après la révocation du certificat (3, 6), ou à la révocation du certificat (3, 6), classe cet événement comme security event et met un message correspondant dans une archive du système de commande et/ou dans un environnement reposant sur le nuage.

18. Utilisation d'un système de commande suivant l'une des revendications 1 à 9 pour faire fonctionner une installation technique, en particulier une installation de processus ou de fabrication.
